(19) Europäisches Patentamt
European Patent Office
Office européen des brevets

(11) EP 3 077 857 B1

(12) # FASCICULE DE BREVET EUROPEEN

(45) Date de publication et mention de la délivrance du brevet:
**20.05.2020 Bulletin 2020/21**

(21) Numéro de dépôt: **14809345.3**

(22) Date de dépôt: **03.12.2014**

(51) Int Cl.:
***G02B 1/10*** *(2015.01)* ***G02B 27/00*** *(2006.01)*

(86) Numéro de dépôt international:
**PCT/EP2014/076357**

(87) Numéro de publication internationale:
**WO 2015/082521 (11.06.2015 Gazette 2015/23)**

(54) **ARTICLE D'OPTIQUE COMPORTANT UN REVÊTEMENT PRÉCURSEUR D'UN REVÊTEMENT ANTIBUÉE AYANT DES PROPRIÉTÉS ANTISALISSURE**

OPTISCHER ARTIKEL MIT EINER BESCHICHTUNG ALS VORLÄUFER EINER ANTIBESCHLAGBESCHICHTUNG MIT FÄULNISVERHINDERNDEN EIGENSCHAFTEN

OPTICAL ARTICLE HAVING A PRECURSOR ANTIFOG COATING HAVING ANTIFOULING PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1362048**

(43) Date de publication de la demande:
**12.10.2016 Bulletin 2016/41**

(73) Titulaire: **Satisloh AG**
**6340 Baar (CH)**

(72) Inventeurs:
- **CADET, Mamonjy**
  **F-94220 Charenton Le Pont (FR)**
- **THEODEN, Alexis**
  **F-94220 Charenton Le Pont (FR)**

(74) Mandataire: **Jacobacci Coralis Harle**
**32, rue de l'Arcade**
**75008 Paris (FR)**

(56) Documents cités:
**EP-A1- 2 021 836 WO-A1-2006/049020**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 077 857 B1

## Description

La présente invention s'intéresse à l'obtention d'un article d'optique, plus particulièrement d'une lentille ophtalmique, dont la surface a été modifiée afin de présenter à la fois des propriétés antisalissure et de présenter un effet antibuée efficace et durable dans le temps après application d'une solution antibuée temporaire. La présente invention concerne un tel article, son procédé de préparation et son association à un tensioactif ou à un tissu imprégné d'un tel tensioactif lui conférant des propriétés antibuée.

De nombreux supports, tels que les matières plastiques et le verre, présentent l'inconvénient de se recouvrir de buée lorsque la température de leur surface descend au-dessous du point de rosée de l'air ambiant. C'est le cas notamment du verre que l'on utilise pour former des vitrages pour véhicules de transport ou le bâtiment, des miroirs, des lentilles ophtalmiques telles que des verres de lunettes, etc. La formation de buée sur ces surfaces entraîne une diminution de la transparence, due à la diffusion de la lumière par les gouttes d'eau, ce qui peut provoquer une gêne importante.

Pour éviter la formation de buée dans un environnement très humide, c'est-à-dire la condensation de minuscules gouttelettes d'eau sur un support, il est possible de déposer sur la surface externe de ce support des revêtements hydrophiles, ayant un faible angle de contact statique avec l'eau (typiquement 10° ou moins). Ces revêtements antibuée permanents, dont les propriétés hydrophiles découlent de composés hydrophiles liés de façon permanente à un autre revêtement ou support, agissent comme des éponges vis-à-vis de la buée et permettent aux gouttelettes d'eau d'adhérer à la surface du support en formant un film très fin donnant une sensation de transparence. Par suite de l'absorption d'eau, ils gonflent, se ramollissent et deviennent moins résistants mécaniquement.

Une autre solution consiste à utiliser une couche mince poreuse de bas indice de réfraction, constituée en partie de tensioactifs, lesquels permettent à la couche d'acquérir des propriétés antibuée permanentes.

Une alternative plus intéressante aux revêtements antibuée permanents consiste à obtenir un revêtement antibuée par application d'une solution hydrophile temporaire à la surface d'un revêtement précurseur d'un revêtement antibuée.

Il a été décrit dans les demandes de brevet internationales WO 2011/080472, WO 2012/153072 et WO 2013/013929 le dépôt, sur la surface externe d'un article d'optique revêtu d'un revêtement comportant à sa surface des groupes silanols, d'un revêtement précurseur d'un revêtement antibuée obtenu par greffage d'un composé possédant un groupe polyoxyalkylène, notamment un organosilane de formule $CH_3O\text{-}(CH_2CH_2O)_{6\text{-}9}\text{-}(CH_2)_3Si(OCH_3)_3$ (III). Ce revêtement précurseur d'un revêtement antibuée est hydrophile puisqu'il possède un angle de contact statique avec l'eau allant de 10° à 50°. Le revêtement antibuée proprement dit, qui est un revêtement temporaire, est obtenu après application d'un film d'une composition de tensioactif à la surface du revêtement précurseur, directement sous forme liquide ou au moyen de lingettes sèches ou humides comprenant ladite composition.

Les précurseurs de revêtements antibuée décrits dans ces demandes donnent accès à des revêtements antibuée très performants, mais pour lesquels il est souhaitable d'améliorer la nettoyabilité. Ces derniers, également dénommés "revêtements hydrophobes et/ou oléophobes", sont généralement fabriqués à partir de fluorosilanes ou fluorosilazanes, c'est-à-dire des silanes ou des silazanes contenant des atomes de fluor, et ne permettent naturellement pas de conférer des propriétés antibuée. Des composés utilisables pour obtenir de tels revêtements antisalissure sont décrits dans les brevets JP 2005187936 et US 6183872.

La demande japonaise JP 2004/317539 décrit une lentille revêtue d'un revêtement antireflet et d'un revêtement formé par dépôt d'un composé comprenant un groupement hydrophobe fluoré, un groupement hydrophile comprenant un groupe polyoxyéthylène et un groupe capable de réagir avec la surface du substrat, par exemple le composé de formule $C_8F_{17}O(CH_2CH_2O)_2CONH(CH_2)_3Si(OCH_3)_3$. Le revêtement ainsi formé possède un angle de contact avec l'eau variant de 50 à 90° et donne accès à un revêtement antibuée après application à sa surface de d'un tensioactif.

La demande japonaise JP 2005/281143 décrit d'autres revêtements pour lentilles optiques à base de silanes non fluorés possédant des groupes polyoxyéthylène possedant des angles de contact avec l'eau de l'ordre de 60-65°, qui une fois un surfactant appliqué à leur surface, présentent des propriétés antibuée.

La demande internationale WO 2006/049020 décrit une composition permettant de former à la surface d'une lentille optique un revêtement antisalissure, comprenant un silane polymérisable fluoré et un silane polymérisable possédant un groupe hydrophile (notamment un groupe oxyalkylène), et/ou des hydrolysats de ces silanes. Ces revêtements présentent des angles de contact avec l'eau de l'ordre de 100°.

La demande internationale WO 2013/005710 décrit un article d'optique successivement revêtu d'une couche capable d'absorber l'eau à base d'une résine acrylique ou uréthane possédant une chaîne polyoxyéthylène et d'une couche hydrophobe à base d'un silane amino-modifié ou mercapto-modifié. La surface externe de l'article présente ainsi un angle de contact avec l'eau supérieur ou égal à 100°.

Les revêtements divulgués dans ces différentes demandes possèdent soit des propriétés antisalissure pouvant être améliorées, soient des propriétés antibuée insuffisantes pouvant être améliorées.

La présente invention vise l'obtention d'un article d'optique comportant un revêtement précurseur de revêtement

antibuée, dont les propriétés antisalissure seraient améliorées par rapport aux revêtements précurseurs connus. Les inventeurs ont découvert que le recours à des surfaces « mixtes », possédant à la fois des fonctions hydrophiles et des fonctions hydrophobes, permettait de conserver une performance antibuée satisfaisante tout en améliorant significativement la capacité du revêtement à être nettoyé.

Les objectifs de l'invention sont atteints grâce à un article d'optique ayant un substrat revêtu d'un revêtement précurseur d'un revêtement antibuée dont la surface présente un angle de contact statique avec l'eau supérieur à 90° et une composante polaire de l'énergie de surface supérieure à 1,5 mJ/$m^2$.

L'invention concerne en outre un procédé de préparation d'un tel article d'optique, comprenant :

a) fournir un substrat ayant au moins une surface principale,
b) déposer sur ladite surface principale du substrat au moins un composé A hydrophile et au moins un composé B hydrophobe, de façon à obtenir un revêtement précurseur d'un revêtement antibuée dont la surface présente un angle de contact statique avec l'eau supérieur à 90° et une composante polaire de l'énergie de surface supérieure à 1,5 mJ/$m^2$.

L'invention concerne en outre un ensemble comprenant l'article d'optique tel que défini ci-dessus et un tensioactif.

La présente invention sera décrite plus en détail en référence aux figures 1 à 3 qui représentent la cinétique d'élimination des salissures d'un article d'optique selon l'invention en comparaison avec des articles d'optique de l'art antérieur, sous l'effet de cycles de nettoyages successsifs.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1. De même une couche dite "externe " est plus éloignée du substrat qu'une couche dite "interne".

Par "revêtement antibuée", on entend dans la présente demande un revêtement qui, lorsqu'un substrat en verre transparent revêtu de ce revêtement est placé dans des conditions générant de la buée sur ledit substrat non équipé dudit revêtement, permet immédiatement une acuité visuelle > $6/10^{ème}$ pour un observateur observant à travers le verre revêtu une échelle d'acuité visuelle située à 5 mètres de distance. Un test permettant d'évaluer les propriétés antibuée d'un revêtement est décrit dans la partie expérimentale. Dans des conditions génératrices de buée, les revêtements antibuée peuvent soit ne pas présenter de buée à leur surface (pas de distorsion visuelle dans le cas idéal, ou bien distorsion visuelle mais acuité visuelle > $6/10^{ème}$ dans les conditions de mesure indiquées ci-dessus), soit présenter de la buée à leur surface mais tout de même permettre, malgré la perturbation de la vision causée par la buée, une acuité visuelle > $6/10^{ème}$ dans les conditions de mesure indiquées ci-dessus. Un revêtement non antibuée ne permet pas une acuité visuelle > $6/10^{ème}$ tant qu'il est exposé à des conditions générant de la buée et présente généralement un voile de condensation dans les conditions de mesure indiquées ci-dessus.

Par "verre antibuée", on entend dans la présente demande un verre équipé d'un "revêtement antibuée" tel que défini ci-dessus.

Par "précurseur d'un revêtement antibuée", on entend dans la présente demande un revêtement qui, par application à sa surface d'une composition contenant un surfactant de façon à former un film, constitue un revêtement antibuée au sens de l'invention. La composition comprenant un surfactant peut être une solution liquide appliquée directement sur un article d'optique, soit une composition imprégnant une lingette, cette lingette pouvant être humide ou sèche (absence de solvants), par exemple une lingette sèche CEMOI™ imprégénée de Capstone™ FS3100 telle que celle décrite dans la demande de brevet WO2013013929.

Les surfactants permettant de former un film antibuée comportent de préférence un groupe fluorocarboné et au moins une unité polyoxyalkylène. L'ensemble constitué par le revêtement précurseur et le film de solution à base de surfactant constitue le revêtement antibuée proprement dit.

Ainsi, le précurseur du revêtement antibuée selon l'invention, qui est un revêtement ayant une surface hydrophobe, n'est pas considéré comme étant un revêtement antibuée au sens de l'invention. Effectivement, ce précurseur de revêtement antibuée ne permet pas une acuité visuelle > $6/10^{ème}$ dans les conditions de mesure indiquées ci-dessus.

Par revêtement antibuée temporaire, on entend un revêtement antibuée obtenu après l'application d'une solution liquide contenant au moins un agent conférant des propriétés antibuée, préférentiellement un tensioactif, à la surface d'un revêtement précurseur dudit revêtement antibuée. La durabilité d'un revêtement antibuée temporaire est généralement limitée par des essuyages de sa surface, les molécules de tensioactifs n'étant pas accrochées de façon permanente à la surface du revêtement mais simplement adsorbées plus ou moins durablement.

L'article d'optique préparé selon l'invention comprend un substrat, de préférence transparent (Tv supérieur à

85%, mieux supérieur à 90%, mieux encore supérieurà 95% et de façon optimale supérieur à 97% Le facteur Tv répond à une définition internationale normalisée (norme ISO13666 :1998 et est mesuré conformément à la norme ISO8980-3). Il est défini dans la gamme de longueur d'onde allant de 380 à 780 nm), ayant des faces principales avant et arrière, l'une au moins desdites faces principales, de préférence les deux faces principales, comprenant au moins un revêtement précurseur d'un revêtement antibuée. Par face arrière (généralement concave) du substrat, on entend la face qui, lors de l'utilisation de l'article, est la plus proche de l'œil du porteur. Inversement, par face avant (généralement convexe) du substrat, on entend la face qui, lors de l'utilisation de l'article, est la plus éloignée de l'œil du porteur.

Bien que l'article selon l'invention puisse être un article d'optique quelconque susceptible d'être confronté à une formation de buée, tel qu'un écran, un vitrage pour l'industrie automobile ou du bâtiment, ou un miroir, il est de préférence une lentille optique, mieux une lentille ophtalmique, pour lunettes, ou une ébauche de lentille optique ou ophtalmique. Ceci exclut des articles tels que des lentilles intraoculaires en contact avec des tissus vivants ou des lentilles de contact, qui ne sont intrinsèquement pas confrontées au problème de formation de buée.

Le revêtement précurseur du revêtement antibuée est en contact direct soit avec une surface principale du substrat, soit avec un premier revêtement, lorsque ladite surface principale du substrat est revêtue d'un premier revêtement. Le premier revêtement de l'invention, qui de préférence comporte à sa surface des groupes silanols, peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Dans la suite de la demande, la préparation des couches sera décrite par dépôt direct de celles-ci sur l'article d'optique.

L'invention comprend également un mode de réalisation dans lequel le dépôt de toutes les couches ou de certaine d'entre elles sont effectuées sur un film possédant une face comportant lesdits revêtements et une face destinée à être collée à la surface de l'aticle d'optique.

Outre le collage, les revêtements souhaités peuvent aussi être transféres deouis un support dans lequel les revêtements ont été déposés dans le sens inverse de l'ordre dans lequel ils peuvent apparaître sur l'article final.

Le substrat de l'article d'optique selon l'invention, qui comprend au moins une surface principale, peut être un verre minéral ou organique, par exemple un verre organique en matière plastique thermoplastique ou thermodurcissable.

Des classes de substrats particulièrement préférés sont les poly(thiouréthanes), les polyépisulfures et les résines résultant de la polymérisation ou (co)polymérisation de bis allyl carbonates d'alkylène glycols. Ces derniers sont vendus, par exemple, sous la dénomination commerciale CR-39® par la société PPG Industries (lentilles ORMA® ESSILOR).

D'autres substrats utilisables dans le cadre de l'invention sont des substrats acryliques de type thermodur, des substrats thermoplastiques tels que des substrats à base de Nylon™, le polycarbonate et le PMMA.

Dans certaines applications, il est préférable que la surface principale du substrat soit revêtue d'un ou plusieurs revêtements fonctionnels préalablement au dépôt du premier revêtement. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré, en particulier une couche de primaire antichoc revêtue d'une couche anti-abrasion et/ou anti-rayures.

Le premier revêtement peut être déposé sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtement durs à base de poly(méth)acrylates ou de silanes comprenant généralement une ou plusieurs charges minérales destinées à augmenter la dureté et/ou l'indice de réfraction du revêtement une fois durci. Ils sont décrits plus en détail dans la demande WO 2011/080472.

Préalablement au dépôt du revêtement anti-abrasion et/ou anti-rayures, il est possible de déposer sur le substrat un revêtement de primaire améliorant la résistance au choc et/ou l'adhésion des couches ultérieures dans le produit final. Ces revêtements peuvent être toute couche de primaire antichoc classiquement utilisée pour les articles en matériau polymère transparent, tels que des lentilles ophtalmiques, et sont décrits plus en détail dans la demande WO 2011/080472.

Le premier revêtement selon l'invention peut notamment être un revêtement anti-abrasion et/ou anti-rayure, ou, selon le mode de réalisation préféré, un revêtement antireflet monocouche ou un revêtement antireflet multicouche. Ce premier revêtement comporte de préférence à sa surface des groupes silanols.

Par revêtement comprenant à sa surface des groupes silanols, on entend un revêtement qui possède naturellement à sa surface des groupes silanols, ou bien un revêtement dont les groupes silanols ont été créés après qu'il a été soumis à un traitement d'activation de surface. Ce revêtement est de préférence un revêtement à base de siloxanes ou de silice, par exemple, sans limitation, une couche de silice, un revêtement sol-gel, à base notamment d'organosilanes tels que des alcoxysilanes, ou un revêtement à base de colloïdes de silice. Il peut s'agir notamment d'un revêtement anti-abrasion et/ou anti-rayure, ou d'un revêtement antireflet monocouche ou d'un revêtement antireflet multicouche

dont la couche externe possède à sa surface des groupes silanols. Par couche externe d'un empilement, on entend la couche la plus éloignée du substrat.

Le traitement d'activation de surface éventuellement employé pour créer des groupes silanols ou du moins augmenter leur proportion à la surface d'un revêtement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants. Plusieurs de ces traitements peuvent être combinés.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le revêtement comportant à sa surface des groupes silanols est de préférence une couche de bas indice de réfraction à base d'oxyde de silicium, préférentiellement de silice (comprenant de la silice), idéalement consiste en une couche de silice ($SiO_2$), généralement obtenue par dépôt en phase vapeur. Ladite couche à base de silice a de préférence une épaisseur inférieure ou égale à 500 nm, mieux de 2 à 110 nm, préférentiellement variant de 5 à 100 nm.

Le revêtement comportant à sa surface des groupes silanols comprend de préférence au moins 70 % en masse de $SiO_2$, mieux au moins 80 % en masse et mieux encore au moins 90 % en masse de $SiO_2$. Comme il a été dit, dans une réalisation optimale, il comprend 100 % en masse de silice.

Le revêtement comportant à sa surface des groupes silanols peut également être un revêtement sol-gel à base de silanes tels que des alcoxysilanes, ou des organosilanes, et comprenant éventuellement des oxydes colloïdaux, tel que décrit plus en détail dans la demande WO 2012/153072.

Selon un mode de réalisation de l'invention, le revêtement comportant à sa surface des groupes silanols est une couche à base de silice déposée sur un revêtement anti-abrasion, de préférence déposée directement sur ce revêtement anti-abrasion.

Selon un autre mode de réalisation de l'invention, qui constitue le mode de réalisation préféré, l'article d'optique selon l'invention comporte un revêtement antireflet. Lorsqu'un tel revêtement est présent, il constitue généralement le premier revêtement au sens de l'invention. Ce revêtement antireflet peut être tout revêtement antireflet classiquement utilisé dans le domaine de l'optique, en particulier de l'optique ophtalmique.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article/air sur une portion relativement large du spectre visible.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI). La constitution de ces revêtements, leur épaisseur et leur mode de dépôt sont décrits notamment dans les demandes WO 2010/109154 et WO 2012/153072.

Avant la formation du précurseur du revêtement antibuée sur le premier revêtement ou sur le substrat nu, il est courant de soumettre la surface de ce premier revêtement ou du substrat à un traitement d'activation physique ou chimique, destiné à augmenter l'adhésion du précurseur du revêtement antibuée. Ces traitements peuvent être choisis parmi ceux décrits précédemment pour l'activation du revêtement comprenant à sa surface des groupes silanols.

Selon l'invention, le premier revêtement, lorsqu'il est présent, est directement en contact avec le revêtement précurseur du revêtement antibuée. Selon un autre mode de réalisation, le substrat est lui-même directement en contact avec le revêtement précurseur du revêtement antibuée, qui va maintenant être décrit.

Le revêtement précurseur du revêtement antibuée a une surface présentant un angle de contact statique avec l'eau supérieur à 90° et une composante polaire de l'énergie de surface supérieure à 1,5 mJ/m$^2$.

Les caractéristiques d'énergie de surface (en mJ/m$^2$), composante dispersive et composante polaire de cette énergie de surface sont déterminées par la méthode d'OWENS - WENDT décrite dans la référence : "Estimation of the surface force energy of polymers" OWENS D.K, WENDT R.G. (1969) J. APPL-POLYM-SCI, 13, 1741-1747. On considère que l'énergie de surface, $E^T$, pour un liquide ou un solide est composée d'une composante dispersive, $E^D$, et d'une composante polaire, $E^P$. Elle s'écrit sous la forme $E^T = E^D + E^P$.

Le revêtement externe de l'article d'optique présente une composante polaire de l'énergie de surface qui est de préférence supérieure ou égale à 1,7 mJ/m$^2$, de préférence encore supérieure ou égale à 1,9 mJ/m$^2$, mieux supérieure ou égale à 2 mJ/m$^2$ et encore mieux supérieure ou égale à 2,3 mJ/m$^2$. Dans un mode de réalisation, le revêtement précurseur d'un revêtement antibuée présente une composante polaire de l'énergie de surface inférieure ou égale à 4 mJ/m$^2$. Dans un autre mode de réalisation, le revêtement précurseur d'un revêtement antibuée présente une composante polaire de l'énergie de surface inférieure ou égale à 3,5 mJ/m$^2$, mieux encore inférieure ou égale à 3 mJ/m$^2$. Le revêtement précurseur du revêtement antibuée possède de préférence un angle de contact statique avec l'eau supérieur ou égal

à 95°, de préférence encore supérieur ou égal à 100°, mieux supérieur ou égal à 102°, et idéalement supérieur ou égal à 105°. L'angle de contact statique avec l'eau est de préférence inférieur à 120°.

Le revêtement précurseur du revêtement antibuée est généralement formé d'un matériau contenant des groupes fluorocarbonés et des groupes polyoxyalkylène, c'est-à-dire qu'il comporte à la fois des unités hydrophiles et des unités hydrophobes.

Selon un mode de réalisation préféré, le revêtement précurseur du revêtement antibuée est formé par dépôt en quantités suffisantes sur le premier revêtement ou sur le substrat d'au moins un composé B hydrophobe, d'au moins un composé A hydrophile et de préférence en phase gazeuse, mieux par évaporation, suivie d'un greffage. Les composés A et B sont des composés filmogènes.

Par composé hydrophile, on entend un composé dont un film formé à la surface d'un substrat présente un angle de contact statique avec l'eau inférieur ou égal à 60°, de préférence inférieur ou égal à 55°, mieux inférieur ou égal à 50°. Dans la présente demande, les angles de contact sont mesurés de la façon décrite dans la demande WO 2008/053020.

Par composé hydrophobe, on entend un composé dont un film formé à la surface d'un substrat présente un angle de contact statique avec l'eau supérieur ou égal à 75°, de préférence supérieur ou égal à 90°, de préférence encore supérieur ou égal à 100°, mieux supérieur ou égal à 110°. De préférence, le film formé à la surface d'un substrat présente un angle de contact statique avec l'eau inférieur ou égal à 117°, mieux inférieur ou égal à 116°, 115°, 114°, 113°.

Le composé A hydrophile est porteur d'au moins un groupe hydrophile. Par groupes « hydrophiles », on entend, dans le cadre de la présente invention, des combinaisons d'atomes qui sont susceptibles de s'associer avec des molécules d'eau, notamment par liaison hydrogène. Ce sont généralement des groupes organiques polaires, qui peuvent comprendre des atomes chargés. Le composé A comporte de préférence au moins un groupe choisi parmi les groupes polyoxyalkylène, polyamine, polyol (groupe polyhydroxylé, par exemple un groupe polysaccharide ou polyglycérol), polyéther (par exemple un éther de polyol), de préférence un groupe polyoxyalkylène. Le composé A comporte généralement au moins un groupe capable d'établir une liaison covalente avec un groupe fonctionnel présent sur la surface externe du substrat ou du premier revêtement sur lequel il sera greffé, ou présent dans le composé B, ledit groupe fonctionnel étant de préférence un groupe silanol dans le cas où un premier revêtement est présent. Ce groupe, qui est un groupe réactif, peut être, sans limitation, l'un des groupes suivants : un groupe isocyanate, acrylate, méthacrylate, halogenoalkyle, acide carboxylique ou sulfonique, acide ou ester phosphonique, chlorure d'acyle, chlorosulfonyle, chloroformiate, ester, un atome de silicium portant au moins un groupe hydrolysable, ou un groupe contenant une fonction époxy tel que le groupe glycidyle, préférentiellement un atome de silicium porteur d'au moins un groupe hydrolysable, notamment un groupe silanol ou un précurseur de celui-ci.

Le composé A est de préférence un composé organosilane, mieux un composé organosilane possédant au moins un atome de silicium porteur d'au moins un groupe hydrolysable, encore mieux un composé organosilane possédant un groupe polyoxyalkylène et au moins un atome de silicium porteur d'au moins un groupe hydrolysable.

De préférence, sa chaîne polyoxyalkylène est fonctionnalisée à une seule extrémité ou à ses deux extrémités, idéalement à une seule extrémité, par au moins un, de préférence un seul, groupe comportant au moins un atome de silicium porteur d'au moins un groupe hydrolysable. Ce composé organosilane comprend de préférence un atome de silicium porteur d'au moins deux groupes hydrolysables, de préférence trois groupes hydrolysables. Il s'agit préférentiellement d'un composé de formule :

$$R^1(Y)_mSi(X)_{3-m} \qquad (I)$$

dans laquelle les groupes Y, identiques ou différents, sont des groupes organiques monovalents liés au silicium par un atome de carbone, les groupes X, identiques ou différents, sont des groupes hydrolysables ou des groupes hydroxyle, $R^1$ est un groupe comprenant une fonction polyoxyalkylène, m est un entier égal à 0, 1 ou 2. De préférence m = 0.

Les groupes X sont préférentiellement choisis parmi les groupes alcoxy -O-$R^3$, où $R^3$ est un radical alkyle, linéaire ou ramifié préférentiellement en $C_1$-$C_4$, mieux en C1, acyloxy -OC(O)$R^4$ où $R^4$ est un radical alkyle linéaire ou ramifié, préférentiellement en $C_1$-$C_6$, de préférence méthyle ou éthyle, halogènes tels que Cl et Br ou triméthylsiloxy $(CH_3)_3SiO$-, -$NH_2$,-$NHSiMe_3$, -NH-alkyl ou les groupes dialkylamino dans lesquels les groupes alkyle linéaires ou ramifiés sont préférentiellement en $C_1$-$C_6$ (par exemple les groupes -$N(CH_3)_2$ et -$N(C_2H_5)_2$), et les combinaisons de ces groupes. De préférence, les groupes X sont des groupes alcoxy, et en particulier méthoxy ou éthoxy, et mieux éthoxy.

Le groupe Y, présent lorsque m n'est pas nul, est de préférence un groupe hydrocarboné, saturé ou non, linéaire ou ramifié, de préférence en $C_1$-$C_{10}$ et mieux en $C_1$-$C_4$, par exemple un groupe alkyle, tel que méthyle ou éthyle, un groupe vinyle, un groupe aryle, par exemple aromatique monocyclique ou bicyclique par exemple phényle, éventuellement substitué, notamment par un ou plusieurs groupes alkyle en $C_1$-$C_4$. De préférence Y représente le groupe méthyle.

Selon un mode de réalisation préféré, le composé de formule (I) comprend un groupe trialcoxysilyle tel qu'un groupe triéthoxysilyle ou triméthoxysilyle.

Le groupe polyoxyalkylène du composé organosilane (groupe $R^1$) comprend de préférence moins de 80 atomes de carbone, mieux moins de 60 atomes de carbone, et encore mieux moins de 50 atomes de carbone. Le groupe $R^1$ vérifie de préférence ces mêmes conditions.

Le groupe $R^1$ a généralement pour formule $-L-R^2$, où L est un groupe divalent lié à l'atome de silicium des composés de formule I ou II par un atome de carbone, et $R^2$ est un groupe comprenant un groupe polyoxyalkylène lié au groupe L par l'intermédiaire d'un atome d'oxygène, cet atome d'oxygène étant compris dans le groupe $R^2$. Des exemples non limitatifs de groupes L sont les groupes alkylène linéaires ou ramifiés, de préférence de C2 à C15, et mieux de C2 à C15, et mieux encore de C2 à C10, éventuellement substitués,un groupement en C3-C10 monocyclique ou bicyclique, cycloalkylène, de préférence C3-C10 monocyclique ou bicyclique arylène, carbonyle, amido, ou des combinaisons de ces groupes comme les groupes cycloalkylènealkylène, biscycloalkylène, biscycloalkylènealkylène, arylènealkylène, bisphénylène, bisphénylènealkylène, amido alkylène, dont un exemple est le groupe $CONH(CH_2)_3$, ou bien les groupes $-OCH_2CH(OH)CH_2-$ et -NHC(O)-. Les groupes L préférés sont les groupes alkylène, de préférence linéaire, ayant de préférence 10 atomes de carbone ou moins, mieux 5 atomes de carbone ou moins, par exemple les groupe éthylène et propylène.

Les groupes $R^2$ préférés comprennent un groupe polyoxyéthylène $-(CH_2CH_2O)_n-$, polyoxypropylène, ou des combinaisons de ces groupes.

Les organosilanes de formule (I) préférés sont des composés de formule (II) suivante :

$$Y_m(X)_{3-m}Si(CH_2)_{n'}-(L')_{m'}-(OR)_n-O-(L'')_{m''}-R' \qquad (II)$$

où R' est un atome d'hydrogène, un groupe acyle ou un groupe alkyle, linéaire ou ramifié, préférentielllement en C1-C10 et mieux C1 à C5 éventuellement substitué par un ou plusieurs groupes fonctionnels, et pouvant comporter en outre une ou plusieurs doubles liaisons, R est un groupe alkylène linéaire ou ramifié, de préférence linéaire,comprenant de préférence de 2 à 3 C par exemple un groupe éthylène ou propylène, L' et L" identiques ou différents sont des groupes divalents, X, Y et m sont tels que définis ci-dessus, n' est un entier allant de 1 à 10, de préférence de 1 à 5, n est un entier allant de 3 à 50, de préférence de 4 à 50, mieux de 4 à 30, mieux de 5 à 25, m' est égal à 0 ou 1, de préférence 0, m" est égal à 0 ou 1, de préférence 0.

Les groupes L' et L", lorsqu'ils sont présents, peuvent être choisis parmi les groupes divalents L précédemment décrits et représentent de préférence le groupe $-OCH_2CH(OH)CH_2-$ ou le groupe -NHC(O)-. Dans ce cas, les groupes $-OCH_2CH(OH)CH_2-$ ou -NHC(O)- sont connectés aux groupes adjacents $(CH_2)_{n'}$ (dans le cas d'un groupe L') et R' (dans le cas d'un groupe L") par l'intermédiaire de leur atome d'oxygène (pour le groupe $-OCH_2CH(OH)CH_2-$) ou par l'intermédiaire de leur atome d'azote (pour le groupe -NHC(O)-).

Le groupe $-O-(L'')_{m''}-R'$ est de préférence un groupe alcoxy (m" = 0, R' = alkyl), idéalement un groupe méthoxy.

De préférence, les composés de formule (I) ou (II) comprennent un seul atome de silicium porteur d'au moins un groupe hydrolysable.

Selon un mode de réalisation, m = 0 et les groupes hydrolysables X désignent des groupes méthoxy ou éthoxy. n' est de préférence égal à 3. Selon un autre mode de réalisation, R' désigne un groupe alkyle possédant moins de 5 atomes de carbone, de préférence le groupe méthyle. R' peut aussi désigner un groupe acyle aliphatique ou aromatique, notamment le groupe acétyle.

Enfin, R' peut désigner un groupe trialcoxysilylalkylène ou trihalogénosilylalkylène tel que le groupe $-(CH_2)_{n''}Si(R^5)_3$ les groupements $R^5$ étant identiques ou différents $R^5$ est un groupe hydrolysable tel que les groupes X définis précédemment et n" est un entier tel que le groupe n' défini précédemment. Un exemple d'un tel groupe R' est le groupe $-(CH_2)_3Si(OC_2H_5)_3$. Dans ce mode de réalisation, le composé organosilane comporte deux atomes de silicium porteurs d'au moins un groupe hydrolysable.

Selon des modes de réalisation préférés, n est égal à 3, ou bien varie de 6 à 9, de 9 à 12, de 21 à 24, ou de 25 à 50 de préférence de 6 à 9.

Comme exemples de composés de formule (II), on peut citer les 2-[méthoxy(polyéthylèneoxy)propyl]triméthoxysilane de formules $CH_3O-(CH_2CH_2O)_{6-9}-(CH_2)_3Si(OCH_3)_3$ (III) et $CH_3O-(CH_2CH_2O)_{9-12}-(CH_2)_3Si(OCH_3)_3$ (IV), commercialisés par Gelest, Inc. ou ABCR, le composé de formule $CH_3O-(CH_2CH_2O)_3-(CH_2)_3Si(OCH_3)_3$ (VIIa), plus généralement les composés de formule $CH_3O-(CH_2CH_2O)_n-(CH_2)_3Si(OCH_3)_3$ où n varie de 4 à 45 (dont notamment n = 21, 22, 23 ou 24), les 2-[méthoxy(polyéthylèneoxy)propyl] trichlorosilanes, le 2-[acétoxy(polyéthylèneoxy)propyl] triméthoxysilane de formule $CH_3C(O)O-(CH_2CH_2O)_{6-9}-(CH_2)_3Si(OCH_3)_3$, le 2-[acétoxy(polyéthylèneoxy)propyl] triéthoxysilane de formule $CH_3C(O)O-(CH_2CH_2O)_{6-9}-(CH_2)_3Si(OC_2H_5)_3$, le 2-[hydroxy(polyéthylèneoxy) propyl]triméthoxysilane de formule $HO-(CH_2CH_2O)_{6-9}-(CH_2)_3Si(OCH_3)_3$, le 2-[hydroxy(polyéthylèneoxy)propyl]triéthoxysilane de formule $HO-(CH_2CH_2O)_{6-9}-(CH_2)_3Si(OC_2H_5)_3$, les composés de formules $HO-(CH_2CH_2O)_{8-12}-(CH_2)_3Si(OCH_3)_3$ et $HO-(CH_2CH_2O)_{8-12}-(CH_2)_3Si(OC_2H_5)_3$, l'oxyde de polypropylène-bis[(3-méthyldiméthoxysilyl)propyl], et les composés à deux têtes siloxanes tels que l'oxyde de polyéthylène-bis[(3-triéthoxysilylpropoxy)-2-hydroxypropoxy] de formule (V), l'oxyde de polyéthylène-bis[(N,N'-triéthoxysilylpropyl)-aminocarbonyl] de formule (VI) avec n = 10-15 et l'oxyde de polyéthylène-bis(triéthoxysilylpropyl) de formule (VII) :

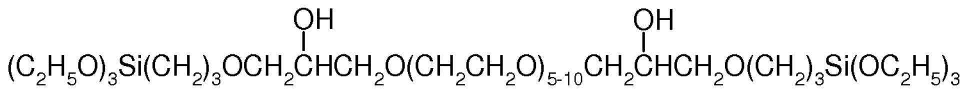

(V)

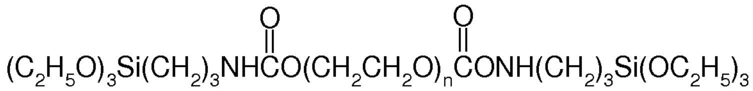

(VI)

$$(C_2H_5O)_3Si(CH_2)_3O(CH_2CH_2O)_{25\text{-}30}(CH_2)_3Si(OC_2H_5)_3 \qquad \text{(VII)}$$

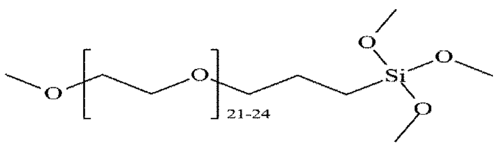

(VIIa)

CAS : 65994-07-2

Les familles de composés de formule (II) préférée sont celles des [alcoxy (polyalkylènoxy) alkyl]trialcoxysilanes ou leurs analogues trihalogénés (m = m' = m" = 0, R' = alcoxy), le composé préféré étant celui de formule (III).

De préférence, le composé A selon l'invention ne possède pas d'atome de fluor. De préférence, la masse molaire du composé A selon l'invention va de 400 à 4000 g/mol, de préférence de 400 à 1500 g/mol, mieux de 400 à 1200 g/mol, et encore mieux de 400 à 1000 g/mol.

Le composé B hydrophobe est porteur d'au moins un groupe hydrophobe. Par groupes « hydrophobes », on entend, dans le cadre de la présente invention, des combinaisons d'atomes qui ne sont pas susceptibles de s'associer avec des molécules d'eau, notamment par liaison hydrogène. Ce sont généralement des groupes organiques non polaires, exempts d'atomes chargés.

Le composé B comporte de préférence au moins un groupe fluoré, de préférence perfluoré, typiquement un groupe fluorocarboné, choisi préférentiellement parmi les groupes fluoroalkyle, fluoroalcényle, perfluoroalkyle, perfluoroalcényle, (poly)(fluoro alkyl éther), (poly)(perfluoro alkyl éther), (poly)fluoro alcoxy[(poly)alkylènoxy] alkyle, de préférence fluoroalkyle. Ces groupes, linéaires, cycliques ou ramifiés, peuvent être directement connectés les uns aux autres ou par l'intermédiaires de groupes divalents, notamment des groupes alkylène, alcénylène, des atomes d'oxygène ou des ponts azotés (-NH-, -N=). Les groupes fluorocarbonés comprennent de préférence au moins 50 % d'atomes de fluor en remplacement des atomes d'hydrogène du groupe hydrocarboné dont ils dérivent, mieux au moins 70 % et encore mieux au moins 90 %. Ces groupes peuvent par exemple comprendre des unités telles que -CHF-, -CHF-CHF-, $-CH_2-C(CF_3)_2-$, $-CF_2-C(CF_3)_2-$, $-CF_2-$, $-CF_2-CF_2-$, $-CF_2-CF_2-CF_2-$, $-CF_2-C(CF_3)_2-$, $-(CHF)_n-$, $-(CF_2)_n-$, n désignant un entier supérieur ou égal à 3.

Par groupe poly(fluoro alkyl éther), on entend un groupe résultant de la polymérization d'unités fluoroalcoxy ou de la copolymérisation de ces unités avec d'autres unités telles que des unités alcoxy. Des exemples de tels groupes sont les groupes $-(CHF-CHF-O)_n-$, $-(CH_2-CF_2-O)_n-$, $-(CF_2-CF_2-O)_n-$, $-(CF_2-CF_2-CF_2-O)_n-$, $-(CF_2-CH(CF_3)-O)_n-$, $-(CF_2-CF(CF_3)-O)_n-$, n désignant un entier supérieur ou égal à 1. De tels groupes peuvent aussi inclure des unités polyalcoxy telles que $-(CH_2-CH_2-O)_m-$, $-(CH_2-CH_2-CH_2-O)_m-$ $-(CH_2-C(CH_3)_2-O)_m-$, m désignant un entier supérieur ou égal à 1.

Le composé B comporte généralement au moins un groupe capable d'établir une liaison covalente avec un groupe fonctionnel présent sur la surface externe du substrat ou du premier revêtement sur lequel il sera greffé, ou présent dans le composé A, ledit groupe fonctionnel étant de préférence un groupe silanol dans le cas où un premier revêtement est présent. Ce groupe, qui est un groupe réactif, peut être, sans limitation, l'un des groupes suivants : un groupe isocyanate, acrylate, méthacrylate, halogenoalkyle, acide carboxylique ou sulfonique, chlorure d'acyle, chlorosulfonyle, chloroformiate, ester, un atome de silicium portant au moins un groupe hydrolysable (le groupe hydroxyle étant ici considéré comme un groupe hydrolysable), ou un groupe contenant une fonction époxy tel que le groupe glycidyle, préférentiellement un atome de silicium porteur d'au moins un groupe hydrolysable, notamment un groupe silanol ou un précurseur de celui-ci.

Des exemples de groupes hydrolysables sont les groupes X tels que définis ci-dessus.

Le composé B est de préférence un composé organosilane (ce terme incluant notamment les organosilazanes), mieux un composé organosilane possédant au moins un (de préférence un) atome de silicium porteur d'au moins un

groupe hydrolysable, encore mieux un composé organosilane possédant au moins un groupe hydrophobe, notamment fluoroalkyle, et au moins un atome de silicium porteur d'au moins un groupe hydrolysable, par exemple un organo alcoxysilane. Selon un mode de réalisation, le composé B comprend au moins un groupe $-Si(R)_3$, où R représente un groupe hydrolysable, notamment choisi parmi les groupes-$OCH_3$, $-OC_2H_5$, -OH et $-NH_2$. Ainsi, le composé B peut par exemple être un silazane ou comprendre un groupe trialcoxysilyle. De préférence B comporte un groupe trialkoxysilyle.

De préférence, sa chaîne hydrophobe, par exemple fluoroalkyle, est fonctionnalisée à une seule extrémité ou à ses deux extrémités, idéalement à une seule extrémité, par au moins un, de préférence un seul, groupe comportant au moins un (de préférence un) atome de silicium porteur d'au moins un groupe hydrolysable. Ce composé organosilane comprend de préférence un atome de silicium porteur d'au moins deux groupes hydrolysables, de préférence trois groupes hydrolysables. De préférence, une seule extrémité de chaîne du composé B comprend un groupe silanol ou un précurseur de groupe silanol.

Le composé B peut être choisi parmi les silanes (ou silazanes) de formules (VIII) et (IX) :

$$F(CF_2)_c-(CH_2)_d-(CF_2)_e-(CH_2)_f-Si(R)_3 \qquad (VIII)$$

$$H(CH_2)_g-(CF_2)_h-(CH_2)_i-(CF_2)_j-Si(R)_3 \qquad (IX)$$

où chacun de c, d, e, f, g, h, i et j désigne un entier allant de 0 à 10, l'un au moins de c, d, e et f est différent de 0, l'un au moins de g, h, i et j est différent de 0, et R est un groupe hydrolysable tel que défini ci-dessus. De préférence, $5 \leq c+d+e+f \leq 15$ et/ou $5 \leq g+h+i+j \leq 15$, et mieux $5 \leq c+d+e+f \leq 12$ et/ou $5 \leq g+h+i+j \leq 12$.

Un constituant B préféré est un composé silazane, comportant une liaison Si-N hydrolysable, tel que le fluoroalkyl silazane de formule $CF_3-(CF_2)_7-CH_2-CH_2-Si(NH_2)_3$. Ce composé est disponible sous le nom d'OF110™ auprès de la société Optron. D'autres constituants B utilisables sont le composé fluoré OF210™ de la même société et le composé commercialisé par la société Shin-Etsu Chemical sous la dénomination KP 911®.

Le composé B, lorsqu'il est déposé en monocouche de 5 nm sur une surface de silice $SiO_2$ conduit généralement à une couche possédant une énergie de surface inférieure ou égale à 16 $mJ/m^2$, mieux inférieure ou égale à 15 $mJ/m^2$, et mieux encore inférieure ou égale à 14 $mJ/m^2$.

De préférence, la masse molaire du composé B selon l'invention est inférieure ou égale à 900 g/mol, de préférence encore inférieure ou égale à 800 g/mol, mieux inférieure ou égale à 700 g/mol, et encore mieux inférieure ou égale à 700 g/mol. Elle va de préférence de 300 à 800 g/mol, mieux de 300 à 700 g/mol, et encore mieux de 400 à 600 g/mol.

Le précurseur du revêtement antibuée selon l'invention, formé à partir d'au moins un composé A possédant de préférence un groupe polyoxyalkylène et d'au moins un composé B possédant de préférence un groupe fluorocarboné tels que définis ci-dessus, constitue également un revêtement antisalissure. Il permet généralement d'abaisser l'énergie de surface de l'article d'optique à 25 $mJ/m^2$ ou moins..

En l'absence de composé A hydrophile, le revêtement obtenu ne possède pas de propriétés antibuée satisfaisantes, alors qu'en l'absence de composé B hydrophobe, le revêtement obtenu ne possède pas de propriétés antisalissure satisfaisantes.

Selon un mode de réalisation de l'invention, le précurseur du revêtement antibuée comprend plus de 80 % en masse de composé A et B selon l'invention, par rapport à la masse totale du précurseur du revêtement antibuée, de préférence plus de 90 %. Selon un mode de réalisation, le précurseur de revêtement antibuée consiste en une couche desdits composés A et B.

De préférence, le précurseur de revêtement antibuée de l'invention contient moins de 5 % en masse d'oxyde métallique ou de métalloïde (par exemple de silice ou d'alumine) par rapport à la masse totale du revêtement, mieux n'en comprend pas. Lorsque le composé organosilane utilisé pour la formation du revêtement antibuée est déposé sous vide, de préférence aucun oxyde métallique n'est co-évaporé avec lui, selon la technique de la coévaporation d'au moins un composé organique et d'au moins un composé inorganique décrite dans la demande EP 1324078.

Selon l'invention, le dépôt des composés A et B forme un revêtement précurseur d'un revêtement antibuée comprenant une partie interne dans laquelle lesdits composés A et/ou B sont greffés au premier revêtement (lorsqu'il est présent), au substrat, et/ou entre eux (au moins en partie) de façon permanente (au moyen d'une liaison covalente et non par simple adsorption), et une partie externe éliminable par lavage et/ou essuyage (mécaniquement et/ou chimiquement).

Pour parvenir à une telle structure, il est possible de déposer un excès de composés A et/ou B à la surface du premier revêtement ou du substrat comportant de préférence des groupes silanols, préférentiellement un excès de composé A Le réglage des paramètres de dépôt pour parvenir à une telle configuration est à la portée de l'homme du métier. Par excès, on entend qu'une quantité de composé A hydrophile, déposé après le composé B, et/ou une partie du composé B, est restée libre, c'est-à-dire qu'il n'est pas greffé par une liaison covalente, soit avec le premier revêtement ou le substrat, soit avec le composé A ou B.

Le greffage des composés A et B à la surface du substrat ou du premier revêtement inclut le cas où chacun de ces deux composés est greffé de façon covalente, directement, ou bien seulement l'un d'entre eux, de préférence le composé B. Selon un mode de réalisation, lorsque les composés A et/ou B sont des silanes dont l'atome de silicium possède au moins un groupe R hydrolysable, au moins l'un des groupes Si-R du composé A et/ou du composé B est lié de façon covalente à un groupe hydroxyle du substrat ou du premier revêtement.

Le revêtement précurseur du revêtement antibuée est un revêtement ayant de préférence une épaisseur (avant essuyage) supérieure ou égale à 3 nm, mieux ≥ 5 nm, encore mieux ≥ 8 nm, et idéalement ≥ 10 nm. Son épaisseur est préférentiellement inférieure à 100 nm, mieux ≤ 50 nm et encore mieux ≤ 20 nm. Elle va typiquement de 3 à 100 nm, de préférence de 5 à 50 nm.

Le dépôt des composés A et B à la surface du premier revêtement ou du substrat selon l'invention peut être réalisé selon des techniques habituelles, de préférence par dépôt en phase gazeuse ou en phase liquide, mieux en phase gazeuse, généralement dans une chambre à vide.

Le dépôt en phase vapeur peut consister en un dépôt physique en phase vapeur (PVD) ou un dépôt chimique en phase vapeur (CVD), tel que, sans limitation, une évaporation, éventuellement assistée par faisceau d'ions, une pulvérisation, un dépôt chimique en phase vapeur assisté par plasma. La méthode préférée est le dépôt physique en phase vapeur, en particulier l'évaporation sous vide, généralement combinée à un chauffage des composés à évaporer. Elle peut être mise en jeu en utilisant des systèmes d'évaporation aussi divers qu'une source thermique à effet Joule (l'effet Joule est la manifestation thermique de la résistance électrique) ou un canon à électrons, tout autre dispositif connu de l'homme du métier pouvant également être utilisé.

Les composés A et B peuvent être au préalable dissous dans un solvant avant d'être évaporés, pour mieux contrôler la vitesse d'évaporation et de dépôt.

Le composé A hydrophile est de préférence déposé par évaporation sous vide en utilisant une source thermique à effet Joule. Le composé B hydrophobe est de préférence déposé par évaporation sous vide en utilisant un canon à électrons pour provoquer sa vaporisation.

Les composés A et B peuvent être déposés successivement, c'est-à-dire sans chevauchement des étapes de dépôt de l'un et de l'autre composé ou de façon concomitante (par exemple par coévaporation) ou partiellement concomitante. Pour cela, on peut placer les deux composés A et B dans un récipient métallique, par exemple une capsule en cuivre, disposée sur un système à effet Joule. La capsule de cuivre peut contenir de la paille de fer ou une mousse métallique (de préférence de nickel). Dans un mode de réalisation, le composé A est imprégné dans la paille de fer ou la mousse métallique, et le composé B est simplement versé dans la capsule.

Ces composés sont préférentiellement déposés successivement. L'étape de dépôt du composé B hydrophobe est de préférence débutée avant l'étape de dépôt du composé A hydrophile. Selon le mode de réalisation optimal, la formation du précurseur du revêtement antibuée selon l'invention par évaporation sous vide est préférentiellement réalisée par dépôt successif d'un composé B hydrophobe puis d'un composé A hydrophile.

La durée du processus de dépôt et notamment de l'évaporation est ajustée de façon à obtenir l'épaisseur de revêtement désirée.

Les conditions de dépôt sont choisies de façon à ce que l'on obtienne, après le dépôt des composés A et B, un revêtement présentant un angle de contact statique avec l'eau supérieur à 90° et une composante polaire de l'énergie de surface supérieure à 1,5 mJ/$m^2$. La nature des composés employés, leurs quantités respectives (qui peuvent être modulées en ajustant les débits évaporés), l'ordre dans lequel ils sont déposés et la durée du dépôt sont des exemples de paramètres que l'homme du métier saura faire varier pour parvenir au revêtement ayant les propriétés souhaitées.

Les composés A et B sont de préférence utilisés lors du dépôt dans des quantités et des conditions telles que l'on formerait, s'ils étaient déposés sur des supports séparés, des couches de composé A et B dans un ratio [épaisseur physique de couche de composé A] / [épaisseur physique de couche de composé B] inférieur à 3, et de préférence supérieur à 0,8. Le composé A doit être utilisé en quantité suffisante de façon à ce que la surface du revêtement précurseur du revêtement antibuée présente une composante polaire de l'énergie de surface supérieure à 1,5 mJ/$m^2$.

Selon un mode de réalisation de l'invention, les conditions de dépôt sont choisies de sorte que les gammes d'épaisseurs physiques réelles mesurées pour chacune de ses couches, mesurées en monocouche, soient de 1 à 15 nm pour la couche obtenue à partir du composé hydrophobe B ; 4-50 nm, préférentiellement 4 à 25 nm, pour la couche obtenue à partir du composé hydrophile A.

Les mesures peuvent être faites par ellipsométrie multilongueur d'onde.

Le revêtement précurseur du revêtement antibuée peut être obtenu en déposant directement la quantité adéquate de composés A et B.

Cependant, les inventeurs ont constaté qu'il était préférable de former le revêtement précurseur du revêtement antibuée en déposant un excès de composés A et B et pricipalement un excès de composé A hydrophile à la surface de l'article d'optique, et en éliminant l'excès de ces composés déposés mais non greffés, de façon à parvenir à la même épaisseur finale désirée. Cette façon de procéder garantit la performance antibuée des verres traités. Les inventeurs ont en effet constaté que lorsque l'on déposait directement une couche de revêtement précurseur sans excès d'épaisseur,

on pouvait dans certains cas obtenir un dépôt irrégulier et un revêtement précurseur de revêtement antibuée dont la surface ne possède pas une affinité suffisante vis-à-vis d'une solution liquide de tensioactif, ce qui conduit à un revêtement ne possédant pas les propriétés antibuée recherchées.

Après le dépôt des composés A et B conformément à l'invention, la partie externe du revêtement éliminable par essuyage peut être éliminée, par lavage et/ou essuyage, ou bien peut subir la technique d'élimination décrite dans la demande WO 2012/153072, qui met en jeu l'utilisation d'une couche temporaire, dans le cas où une telle couche temporaire a été déposée. La partie externe du revêtement précurseur du revêtement antibuée est éliminable par lavage et/ou essuyage, ce qui signifie qu'elle peut être éliminée en la soumettant notamment à un lavage avec de l'eau savonneuse (renfermant un tensioactif) au moyen d'une éponge puis avec de l'eau désionisée, et/ou à un essuyage pendant typiquement 20 secondes ou moins, au moyen d'un tissu CEMOI™, Wypall™ ou Selvith™ sec ou éventuellement imprégné d'alcool, typiquement de l'alcool isopropylique. Cet essuyage peut éventuellement être suivi d'un nouveau rinçage à l'eau désionisée et d'un essuyage final avec un chiffon.

Après l'élimination du surplus de composés A et éventuellement de composés B déposés, c'est-à-dire de la partie externe du revêtement précurseur du revêtement antibuée éliminable par essuyage, il ne subsiste à la surface du premier revêtement selon l'invention ou du substrat que la partie interne du revêtement précurseur du revêtement antibuée contenant les composés A et B effectivement greffés. Les molécules non greffées sont ainsi évacuées. La partie interne du revêtement précurseur n'est pas éliminable au moyen d'un traitement doux tel qu'un essuyage à sec au moyen d'un tissu ou un traitement similaire, ou bien un essuyage avec un tissu imprégné d'eau, d'eau savonneuse ou d'un alcool tel que l'alcool isopropylique.

L'invention concerne également un procédé de préparation d'un article d'optique tel que défini ci-dessus, de préférence une lentille ophtalmique, comprenant :

a) fournir un substrat ayant au moins une surface principale,

b) déposer de préférence par évaporation sous vide sur ladite surface principale du substrat ou sur un premier revêtement, lorsque ladite surface principale du substrat est revêtue d'un premier revêtement, au moins un composé A hydrophile et au moins un composé B hydrophobe, de façon à obtenir un revêtement précurseur d'un revêtement antibuée comprenant une partie interne dans laquelle lesdits composés A et B sont greffés au substrat ou lorsqu'il est présent au premier revêtement, et une partie externe éliminable par lavage et/ou essuyage.

Comme expliqué précédemment, le procédé de l'invention comprend des étapes d'exposition de la surface principale du substrat ou du premier revêtement au composé A et/ou au composé B, généralement dans une chambre à vide, provoquant le dépôt de ce ou ces composés.

Le procédé de l'invention comprend une étape supplémentaire de dépôt d'au moins un tensioactif à la surface du revêtement précurseur du revêtement antibuée obtenu après l'élimination de la partie externe du revêtement précurseur du revêtement antibuée éliminable par essuyage, donnant ainsi accès à un revêtement antibuée temporaire. Ce film de tensioactif fournit aux verres une protection temporaire contre la buée en créant une couche uniforme à leur surface qui aide à disperser les gouttelettes d'eau sur la surface du verre de sorte qu'elles ne forment pas de buée visible.

Selon un mode de réalisation, le tensioactif est déposé en appliquant un film d'une solution liquide contenant au moins un tensioactif. L'application de la solution de tensioactif peut être réalisée par toute technique connue, notamment par trempage, centrifugation ou pulvérisation. La solution de tensioactif est préférentiellement appliquée par dépôt d'une goutte de cette solution à la surface du précurseur du revêtement antibuée puis en l'étalant de façon à couvrir de préférence la totalité dudit revêtement précurseur. La solution de tensioactif appliquée est généralement une solution aqueuse, contenant de préférence de 0,5 à 10 %, mieux de 2 à 8 % en masse de tensioactifs.

Une solution de surfactant disponible dans le commerce pour conférer des propriétés antibuée est la solution Optifog™ Activator de la société Essilor.

Selon un autre mode de réalisation, qui est préféré, le tensioactif est appliqué sur le revêtement précurseur au moyen d'un tissu imprégné dudit tensioactif, par exemple une lingette sèche ou humide, de préférence réutilisable. Il s'agit idéalement d'une lingette sèche, c'est-à-dire présentant un aspect sec au toucher.

Ces tissus imprégnés sont capables de dispenser de façon efficace le tensioactif à la surface d'un substrat, par simple essuyage de la surface à traiter (mouvements de va et vient en translation et/ou rotation).

Le tissu imprégné de tensioactif selon l'invention est de préférence un tissu en microfibres, de préférence encore tissé ou tricoté, mieux tricoté. Le tissu utilisé dans l'invention comprend de préférence au moins 80% en masse de microfibres, mieux au moins 90 % en masse de microfibres, de préférence au moins 95% en masse, mieux 100 % en masse de microfibres. Par microfibres, on entend des fibres textiles dont la masse linéique est inférieure à 1,3 décitex (1,3g /10 km). Le tissu en microfibres comprend de préférence des microfibres de polymère hydrophile et des microfibres de polymère lipophile, notamment des microfibres de polyamide et des microfibres de polyester, mieux de 60 à 85 % en masse de microfibres de polyester et de 15 à 40 % en masse de microfibres de polyamide. Un exemple d'un tel tissu est le tissu Cémoi™, composé de 69,5 % en masse de microfibres de polyester et de 30,5 % en masse de microfibres

de polyamide.

La lingette selon l'invention comprend un tissu imprégné de préférence de 5 à 40 % en masse de tensioactifs par rapport à la masse du tissu non imprégné, de préférence de 10 à 40% en masse, mieux de 15 % à 35 % en masse, et de façon optimale de 20 à 30 % en masse. Les tissus et lingettes imprégnés utilisables pour conférer des propriétés antibuée à un substrat, ainsi que leur mode de préparation, sont décrits plus en détail dans la demande déposée sous le N° FR 2013-50459.

Le tensioactif employé doit être apte à conférer à l'article d'optique des propriétés antibuée après application à sa surface, ce qui peut être vérifié en réalisant le test de la vapeur chaude décrit dans la partie expérimentale.

Une grande variété de tensioactifs peut être employée pour une application directe au moyen d'une solution ou par le biais d'une lingette. Ceux-ci peuvent être ioniques (cationiques, anioniques ou amphotères) ou non ioniques, de préférence non ioniques ou anioniques. Cependant, un mélange de tensioactifs appartenant à ces différentes catégories est envisageable. Des exemples de tensioactifs utilisables sont ceux divulgués dans les demandes WO 2013/013929 et FR 2013-50459. On peut citer les monoéthers d'alkyle de polyéthylène glycols, les tensioactifs possédant un cycle sorbitane et notamment les esters d'acides gras de polyoxyalkylène sorbitane, les copolymères triblocs comprenant deux blocs d'oxyde d'éthylène et un bloc central d'oxyde de propylène, les composés de nature fluoroalkyle polyéthoxylé.

De préférence, on utilise un agent tensioactif comportant un groupe poly(oxyalkylène), mieux un groupe polyoxyalkylène ayant plus de 6 unités oxyalkylène, et encore mieux un groupe polyoxyéthylène possédant plus de 6 unités oxyéthylène.

Le tensioactif utilisé présente de préférence un équilibre hydrophile/lipophile (HLB) $\geq 5$, lequel est de préférence inférieur ou égal à 18, mieux inférieur ou égal à 16 et encore mieux inférieur ou égal à 15, de façon à bénéficier de propriétés antibuée optimales. Le terme équilibre hydrophile/lipophile (en anglais HLB, pour "Hydrophilic Lipophilic Balance") est bien connu de l'homme du métier et représente une grandeur caractéristique d'un tensioactif, qui est d'autant plus grande que la solubilité dans l'eau du tensioactif est élevée. Dans la présente demande, on prendra en compte la valeur théorique (calculée) de l'équilibre hydrophile/lipophile. Les méthodes de calcul à employer, selon la catégorie de tensioactif, sont indiquées dans la demande FR 2013-50459.

Le revêtement antibuée de l'invention obtenu après l'application du tensioactif à la surface du substrat présente de préférence un angle de contact statique avec l'eau inférieur ou égal à 10°, mieux inférieur ou égal à 5°. Il constitue généralement le revêtement externe de l'article d'optique.

L'invention a également trait à un ensemble comprenant un article d'optique ayant un substrat revêtu d'un revêtement précurseur d'un revêtement antibuée dont la surface présente un angle de contact statique avec l'eau supérieur à 90° et une composante polaire de l'énergie de surface supérieure à 1,5 $mJ/m^2$, et un tensioactif ayant de préférence un équilibre hydrophile/lipophile (HLB) $\geq 5$, l'ensemble comprenant de préférence un tissu imprégné dudit tensioactif, mieux une lingette sèche comprenant un tissu en microfibres imprégné dudit tensioactif.

Les exemples suivants illustrent l'invention de façon plus détaillée mais non limitative. Sauf indication contraire, toutes les épaisseurs figurant dans la présente demande sont des épaisseurs physiques, mesurées par ellipsométrie multilongueur d'onde, après dépôt..

EXEMPLES

1. Matériaux et articles d'optique utilisés

Les composés organosilanes hydrophiles A utilisés dans les exemples pour former le précurseur du revêtement antibuée sont le 2-[méthoxy(polyéthylèneoxy)propyl]triméthoxysilane possédant 6 à 9 unités oxyde d'éthylène, de formule (III) et de masse molaire 450-600 g/mol (CAS No. : 65994-07-2, Ref : SIM6492.7, fourni par la société Gelest, Inc.), le composé de formule $CH_3O-(CH_2CH_2O)_{9-12}-(CH_2)_3Si(OCH_3)_3$ (IV), fourni par la société Gelest, Inc. et le composé de formule $CH_3O-(CH_2CH_2O)_{21-24}-(CH_2)_3Si(OCH_3)_3$ (IVa), fourni par la société Gelest (Référence : SIM6492.73).

Le composé organosilane hydrophobe B utilisé dans les exemples pour former le précurseur du revêtement antibuée est le composé fluoré OF210™ fourni par la société Optron. Les autres composés hydrophobes utilisés dans les exemples comparatifs sont l'Optool DSX™ (Daikin Industries), et le KY-130™ (Shin-Etsu Chemical).

Le dispositif d'évaporation sous vide permettant de déposer les différentes couches (antireflet, revêtement précurseur du revêtement antibuée) est une machine Syrus III disposant de deux systèmes d'évaporation de matériaux, un système d'évaporation par canon à électron et un système d'évaporation par effet Joule.

Les verres utilisés dans les exemples selon l'invention comprennent un substrat de lentille en polycarbonate de bisphénol A (correction -8.00 dioptries, +2.00 cylindre), comportant sur chacune de ses faces un primaire antichoc de polyuréthane d'une épaisseur de l'ordre de 1 micron, lui-même revêtu d'un revêtement anti-abrasion d'une épaisseur de l'ordre de 3 microns et d'un revêtement antireflet à cinq couches $ZrO_2/SiO_2/ZrO_2/ITO/SiO_2$. Ces différents revêtements, les autres conditions de dépôt et les traitements qu'ils ont subi sont décrits plus en détail dans la partie expérimentale de la demande WO 2012/153072.

De mêmes verres de lentille ophtalmiique sont également reproduits, mais sans puissance (deux même dioptres en face avant (Convexe) et arrière (concave) pour mesure de Haze.

2. Dépôt du précurseur du revêtement antibuée en phase vapeur

Les différents composés chimiques utilisés pour former des précurseurs de revêtement antibuée sont dans un premier temps conditionnés dans des capsules de cuivre munies de paille de fer afin limiter les projections de produit lors de l'évaporation par effet Joule ou via un canon à électrons. Chaque capsule, contenant 100 à 300 μL de composé, selon l'épaisseur désirée, est préchauffée sur une plaque chauffante à 70°C pendant 2 minutes avant l'étape d'évaporation. Cela permet d'évaporer les solvants éventuels et de dégazer le produit. Le composé OF210™, utilisé préconditionné en capsule de cuivre avec paille de fer, ne nécessite pas d'étape de préchauffage.

Les capsules contenant des composés hydrophobes, comparatifs ou selon l'invention, sont en outre recouvertes d'un couvercle en Tantale perforé de trous obtenu auprès de la société Satis afin d'éviter un impact direct du canon à électrons sur ces composés lors de leur évaporation. Le couvercle est chauffé par le flux d'électrons qui lui-même chauffe la capsule de cuivre par conduction thermique. La température augmente au sein du « four » ainsi créé, jusqu'à obtenir l'évaporation du composé.

Le dépôt du précurseur du revêtement antibuée selon l'invention sur le revêtement antireflet des verres est réalisé en deux étapes. Dans un premier temps, le composé B hydrophobe (OF210™) est déposé par évaporation sous vide en utilisant un système d'évaporation par canon à électrons dans lequel sont disposées les capsules de cuivre contenant les composés à évaporer (vitesse : variant de plus de 0 nm/s à 0,5 nm/s, généralement de 0,25 nm/s, courant d'émission variant de 1 à 4 mA, trace de balayage d'électrons circulaire et large, pression résiduelle moyenne : $7{,}9.10^{-4}$ Pa), puis le composé A hydrophile (composé de formule III) est déposé par évaporation sous vide en utilisant une source thermique à effet Joule, à savoir une nacelle métallique traversée par un courant électrique dans laquelle sont déposées les capsules de cuivre contenant les composés à évaporer (vitesse : variant de plus de 0 nm/s à 0,5 nm/s, généralement de 0,25 nm/s, courant de chauffe variant de 2 à 5,5 A, pression résiduelle moyenne : $5{,}7.10^{-4}$ Pa).

Dans les exemples, différentes quantités de composés A et B ont été évaporées. Le ratio d'épaisseurs indiqué dans ce tableau 1 ci-dessous a été calculé en divisant des épaisseurs physiques théoriques, correspondant aux épaisseurs des revêtements qui auraient été obtenus si les différents composés mis en jeu avaient été déposés sur des supports séparés. En effet, les deux composés évaporés successivement sont susceptibles de réagir entre eux et de conduire à un revêtement final d'épaisseur réelle différente de la somme des épaisseurs théoriques des deux couches déposées.

On obtient un revêtement précurseur de revêtement antibuée ayant une épaisseur de l'ordre de 10 à 17 nm (épaisseurs mesurées avec un ellipsomètre multi-longueur d'ondes, incluant le surplus de composé siloxane).

Dans les exemples comparatifs, deux composés sont successivements évaporés (à l'exception des exemples comparatifs 1 et 8 où un seul composé est évaporé), pour former des revêtements d'épaisseur comparable à celui de l'exemple 1. Les composés hydrophobes (OF210™, Optool DSX™, KY-130™) ont été évaporés au moyen du canon à électrons, alors que le composé hydrophile (III) a été évaporé par effet Joule, sauf pour l'exemple comparatif 5 où les deux composés (hydrophobe et hydrophile) ont été évaporés par effet Joule.

A la fin de l'évaporation, la surface de chaque verre est rincée avec de l'eau savonneuse, de l'eau du robinet, de l'alcool isopropylique, de l'eau du robinet, puis de l'eau désionisée et essuyée avec un tissu Cémoi™ sec afin que le surplus de composés siloxanes déposé soit évacué. Le tissu Cémoi™ désigne un tissu fourni par le fournisseur Facol sous la référence Microfibre M8405 30x40.

Les mesures de propriétés de surfaces des verres (angle de contact, énergie de surface) donnant les résultats indiqués dans le tableau 1 sont effectuées à ce stade, sur les lentilles ainsi lavées et essuyées. Les caractéristiques d'énergie de surface ont été déterminées au moyen d'un appareil DIGIDROP GBX selon la méthode Owens-Wendt décrite dans la référence : « Estimation of the surface force energy of polymers » Owens D. K., Wendt R. G. (1969), J. Appl. Polym. Sci., 13, 1741-1747 en utilisant deux liquides de référence (eau et diiodométhane, aiguille de diamètre interne 0,15 mm). Cet appareil permet aussi la détermination des angles de contact statiques à partir d'une photographie prise à un instant donné (3000 ms) après le dépôt d'une goutte de liquide (ici, l'eau).

3. Formation du revêtement temporaire antibuée et évaluation de ses performances

Les deux faces des verres sont essuyées avec une lingette en tissu Cémoi™ imprégnée de tensioactif (Capstone® FS 3100, 30 % en masse) en effectuant un mouvement en spirale du centre vers le bord avec la lingette, de façon à les « charger » en tensioactif. Ceci correspond à une application. Différents niveaux d'application peuvent être réalisés, par exemple 5, 10 ou 20 applications.

Les verres sont ensuite placés 24 heures dans un environnement régulé en température (20-25°C) et à une

humidité de 50 %, puis placé 15 secondes au dessus d'un récipient chauffé contenant de l'eau à 55°C (test de la vapeur chaude). Immédiatement après, une échelle d'acuité visuelle située à 5 m est observée à travers le verre testé. Le test est considéré comme réussi si un observateur ayant une vision de 10/10 et ayant le verre placé devant son œil obtient une acuité visuelle de 10/10ème (en transmission, tableau Optotype de Snellen placé à 5 mètres, échelle Armaignac Tridents, réf. T6 disponible chez FAX INTERNATIONAL), et n'observe ni buée ni distorsion visuelle. Ce test permet de simuler les conditions de vie courante où un porteur place son visage au dessus d'une tasse de thé, café ou d'une casserole d'eau bouillante.

Les résultats obtenus sont présentés dans le tableau 1. Dans les exemples 1 à 5, les propriétés antibuée ont été obtenues pour un niveau d'application de tensioactif allant de 5 à 15, alors que le verre de l'exemple 6 a nécessité environ 20 applications. Les verres des exemples comparatifs 1 à 5 n'ont pas présenté de propriétés antibuée, même après 20 applications de tensioactif.

L'exemple comparatif 1 montre que si aucun composé A hydrophile n'est utilisé pour former le revêtement externe, ce verre possède des propriétés antisalissure mais aucune propriété antibuée, et ce que le composé B hydrophobe soit déposé par effet Joule ou sous l'action d'un canon à électrons. Seuls les verres des exemples 1 à 5 selon l'invention présentent à la fois des propriétés antibuée et antisalissure.

**Tableau 1**

| Exemple | Premier composé évaporé | Second composé évaporé | Ratio 2nd / 1er composé (*) | **$E^p$ (mJ/m$^2$)** | $E^D$ (mJ/m$^2$) | $E^T$ (mJ/m$^2$) | Angle de contact avec l'eau (°) | Perf. anti-salissure | Perf. antibuée (**) |
|---|---|---|---|---|---|---|---|---|---|
| 1 | OF210™ | Composé (III) | 2,66 | **3,3** | 20,7 | 24 | 93 | +++ | Oui |
| 2 | OF210™ | Composé (III) | 2,15 | **2,7** | 19,2 | 21,9 | 97 | +++ | Oui |
| 3 | OF210™ | Composé (III) | 1,35 | **2,1** | 19,4 | 21,5 | 99 | +++ | Oui |
| 4 | OF210™ | Composé (IV) | 2,30 | **3,2** | 20,2 | 23,4 | 94 | +++ | Oui |
| 5 | OF210™ | Composé (IVa) | 1,93 | **2,4** | 19 | 21,4 | 98 | +++ | Oui |
| 6 | OF210™ | Composé (III) | 0,90 | **1,8** | 19,1 | 20,9 | 100 | +++ | Oui |
| 7 | OF210™ | Composé (III) | 1 | **2,3** | 17,6 | 19,9 | 100 | +++ | Oui |
| Comp. 1 | OF210™ (2 nm d'épaisseur) | | - | **0,9** | 16,4 | 17,3 | 107 | +++ | Non |
| Comp. 2 | Optool DSX™ | Composé (III) | 4 | **0,6** | 14,3 | 14,9 | 110 | +++ | Non |
| Comp.3 | KY-130™ | Composé (III) | >1 | **<1.5** | | | 111 | +++ | Non |
| Comp.4 | OF210™ | Composé (III) | 0,73 | **1,3** | 15,3 | 16,6 | 105 | +++ | Non |
| Comp.5 | OF210™ | Composé III | 1,9 | **0,9** | 19,6 | 20,5 | 104 | +++ | Non |
| Comp. 6 | Composé (III) | OF210™ | na | **na** | na | na | 42-70 | + | Oui |
| Comp. 7 | Composé (III) | Optool DSX™ | na | **na** | na | na | 35-50 | + | Oui |
| Comp. 8 | Composé (III) (12 nm d'épaisseur) (***) | | - | **23,2** | 29,3 | 52,5 | 42,5 | + | Oui |

$E^p$ et $E^D$ : Composantes polaire et dispersive de l'énergie de surface du précurseur de revêtement antibuée, $E^T$ désignant l'énergie totale.
(*) Ratio d'épaisseur physique. (**) Après application d'une solution de tensioactif.
(***) Epaisseur incluant le surplus de composé siloxane. na : non mesuré.

Le comportement anti-salissure d'une lentille ophtalmique selon l'invention Exemple 7 vis-à-vis de la salissure est détaillé ci-dessous, en comparaison avec des lentilles ophtalmiques de l'art antérieur (Lentilles des exemples comparatifs Comp.1 et Comp. 8).
+ indique que les propriétés antisalissures de la lentille sont du même ordre que la lentille de l'exemple comparatif 8 prise comme référence.
+++ indique que la lentille présente des propriétés antisalissures supérieures à celle de la lentille de l'exemple comparatif 8 prise comme référence (Niveau de Haze inférieur de 3, 9%) après deux rotations (selon le protocole de nettoyabilité décrit ci-après selon le test n°1 (tissu CEMOI).

**Méthode**

**Mode opératoire / Nettoyabilité**

Le test est effectué dans une pièce régulée en température à 22°C +/- 3°C et à un taux d'humidité ambiante de 50% +/-10%. Une salissure est obtenue en appliquant au centre du verre une trace de doigt préalablement imprégné de sébum artificiel (constitué majoritairement d'acide oléique). La salissure obtenue (sébum artificiel) se présente sous la forme d'une tache d'environ 20 mm de diamètre.

Les verres sont alors soumis à un essuyage automatique à l'aide du tissu en microfibre imprégné ou non, fixé à un robot mécanique, sous une charge de 750 g (mouvement de va et vient parfaitement reproductible). Une sollicitation d'essuyage correspond à un aller ou un retour du tissu. Le débattement total lors du mouvement du tissu sur la lentille est de 40 mm, soit 20 mm de part et d'autre d'un point centré sur la salissure. Le textile est toujours appliqué dans le même sens contre le verre. Le mouvement partant du centre lors du 1$^{er}$ mouvement et la valeur de 2 qui est mentionnée lors du tout premier déplacement est en fait de 1,5.

La valeur du taux de diffusion en transmission (Haze, noté H) à travers la lentille est mesurée avec un appareil Hazeguard XL 211 Plus, première mesure effectuée au centre du verre sur une zone couverte par le sébum, puis après un nombre de sollicitations d'essuyage égal à 2, 5, 10, 20 ou 30 (les valeurs mentionnées sont des valeurs cumulées depuis le début des essuyages).

Le taux de diffusion H est obtenu conformément à la norme ASTM D1003 *"Standard test method for haze and luminous transmittance of transparent plastics",* en mesurant simultanément la quantité totale de lumière transmise par le verre (I totale) et la quantité de lumière diffuse, en transmission (I diffuse : quantité de lumière transmise et déviée d'un angle supérieur à 2.5° par rapport à la direction normale) :

$$\mathrm{H}(\%) = \frac{I\ diffuse}{I\ totale} \times 100$$

Plus le Haze H diminue rapidement, plus le nettoyage est rapide et la nettoyabilité élevée.

Test n°1 : On teste l'efficacité de nettoyage de la lentille ophtalmique de l'exemple 7 selon l'invention selon le protocole précédent avec un tissu CEMOI™
La figure 1 montre que :

- la lentille ophtalmique selon l'invention est beaucoup moins sensible à la salissure que la lentille de l'exemple comparatif 8 qui est une lentille dont la surface comporte un précurseur de revêtement antibuée de l'état de l'art.

En effet, une trace de doigt génère beaucoup plus de Haze dans le cas de l'exemple comparatif 8 que dans le cas de l'exemple 7 selon l'invention.

- la lentille ophtalmique selon l'invention se nettoie beaucoup plus rapidement qu'une lentille selon l'exemple comparatif 8 et se nettoie aussi bien que la lentille ophtalmique de l'exemple comparatif 1 uniquement revêtue du revêtement antisalissure d'OF210™.

Le Haze est réduit d'un facteur 8 dès le premier cycle de nettoyage (2 rotations)

Test n°2 : On reproduit le test n°1, excepté que l'on utilise un tissu CEMOI™ à toucher sec imprégné de 30% en poids de Capstone™ FS 3100.
La figure 2 montre que la lentille ophtalmique selon l'invention se nettoie mieux qu'une lentille selon les deux exemples comparatifs, en particulier par rapport à la lentille de l'exemple comparatif 8, l'invention est supérieure.

Test n°3 : On reproduit le test n°2, excepté que, avant d'appliquer la trace de doigt, on effectue un traitement de la surface des lentilles ophtalmiques avec un tissu CEMOI™ à toucher sec comprenant 30% en poids de Capstone™ FS 3100 (5 rotations).
On teste donc ainsi des lentilles ophtalmiques antibuée présentant à leur surface une très fine couche de Capstone™ FS 3100.
On vérifie sur la figure 3 que la lentille ophtalmique selon l'invention présente des propriétés de nettoyabilité supérieures à celles d'une lentille selon l'exemple comparatif 8.

## Revendications

1. Article d'optique ayant un substrat revêtu d'un revêtement précurseur d'un revêtement antibuée, **caractérisé en ce que** la surface du revêtement précurseur d'un revêtement antibuée présente un angle de contact statique avec l'eau supérieur à 90° et une composante polaire de l'énergie de surface supérieure à 1,5 $mJ/m^2$, et **en ce que** le revêtement précurseur d'un revêtement antibuée est revêtu d'un film de tensioactif.

2. Article d'optique selon la revendication 1, **caractérisé en ce que** la composante polaire de l'énergie de surface est supérieure ou égale à 1,7 $mJ/m^2$, mieux supérieure ou égale à 2 $mJ/m^2$.

3. Article d'optique selon l'une quelconque des revendications précédentes, **caractérisé en ce que** le revêtement précurseur du revêtement antibuée possède un angle de contact statique avec l'eau supérieur ou égal à 95°, de préférence supérieur ou égal à 100°.

4. Article d'optique selon l'une quelconque des revendications précédentes, **caractérisé en ce que** le revêtement précurseur du revêtement antibuée est formé d'un matériau contenant des groupes fluorocarbonés et des groupes polyoxyalkylène.

5. Article d'optique selon l'une quelconque des revendications précédentes, **caractérisé en ce que** le revêtement précurseur du revêtement antibuée est formé par dépôt d'au moins un composé A hydrophile et d'au moins un composé B hydrophobe.

6. Article d'optique selon la revendication 5, **caractérisé en ce que** le composé A est un organosilane comportant au moins un groupe polyoxyalkylène et ayant au moins un atome de silicium porteur d'au moins un groupe hydrolysable.

7. Article d'optique selon l'une quelconque des revendications 5 ou 6, **caractérisé en ce que** le composé B est un organosilane comportant au moins un groupe fluorocarboné et ayant au moins un atome de silicium porteur d'au moins un groupe hydrolysable.

8. Article d'optique selon l'une quelconque des revendications précédentes, **caractérisé en ce que** le revêtement précurseur du revêtement antibuée a une énergie de surface inférieure ou égale à 25 $mJ/m^2$.

9. Article d'optique selon l'une quelconque des revendications précédentes, **caractérisé en ce qu'**il constitue une lentille ophtalmique.

10. Procédé de préparation d'un article d'optique selon l'une quelconque des revendications précédentes, comprenant :

    a) fournir un substrat ayant au moins une surface principale,
    b) déposer sur ladite surface principale du substrat au moins un composé A hydrophile et au moins un composé B hydrophobe, de façon à obtenir un revêtement précurseur d'un revêtement antibuée dont la surface présente un angle de contact statique avec l'eau supérieur à 90° et une composante polaire de l'énergie de surface supérieure à 1,5 $mJ/\ m^2$,
    c) dépôt d'au moins un tensioactif à la surface du revêtement précurseur.

11. Procédé selon la revendication 10, **caractérisé en ce que** les composés A et B sont déposés par évaporation sous vide.

12. Procédé selon la revendication 11, **caractérisé en ce que** le composé A est déposé par évaporation sous vide en utilisant une source thermique à effet Joule et **en ce que** le composé B est déposé par évaporation sous vide en

utilisant un canon à électrons.

13. Procédé selon l'une quelconque des revendications 10 à 12, **caractérisé en ce que** le revêtement précurseur du revêtement antibuée est formé par dépôts successifs du composé B puis du composé A.

14. Ensemble comprenant :

- un article d'optique ayant un substrat revêtu d'un revêtement précurseur d'un revêtement antibuée, **caractérisé en ce que** la surface du revêtement précurseur d'un revêtement antibuée présente un angle de contact statique avec l'eau supérieur à 90° et une composante polaire de l'énergie de surface supérieure à 1,5 mJ/m$^2$, et
- un tensioactif ayant de préférence un équilibre hydrophile/lipophile (HLB) $\geq$ 5.

15. Ensemble selon la revendication 14, comprenant ledit article d'optique et un tissu imprégné dudit tensioactif.

16. Ensemble selon l'une quelconque des revendications 14 ou 15, comprenant ledit article d'optique et une lingette sèche comprenant un tissu en microfibres imprégné dudit tensioactif.

## Patentansprüche

1. Optischer Artikel, welcher ein Substrat aufweist, das mit einer Vorläuferbeschichtung einer Antibeschlagbeschichtung überzogen ist, **dadurch gekennzeichnet, dass** die Oberfläche der Vorläuferbeschichtung einer Antibeschlagbeschichtung einen statischen Kontaktwinkel mit Wasser, der größer als 90° ist, und eine polare Komponente der Oberflächenenergie, die größer als 1,5 mJ/m$^2$ ist, aufweist, und dadurch, dass die Vorläuferbeschichtung einer Antibeschlagbeschichtung mit einem Tensidfilm überzogen ist.

2. Optischer Artikel nach Anspruch 1, **dadurch gekennzeichnet, dass** die polare Komponente der Oberflächenenergie größer oder gleich 1,7 mJ/m$^2$, besser größer oder gleich 2 mJ/m$^2$ ist.

3. Optischer Artikel nach einem der vorhergehenden Ansprüche, **dadurch gekennzeichnet, dass** die Vorläuferbeschichtung der Antibeschlagbeschichtung einen statischen Kontaktwinkel mit Wasser besitzt, der größer oder gleich 95°, vorzugsweise größer oder gleich 100° ist.

4. Optischer Artikel nach einem der vorhergehenden Ansprüche, **dadurch gekennzeichnet, dass** die Vorläuferbeschichtung der Antibeschlagbeschichtung aus einem Material ausgebildet ist, das Fluorkohlenstoffgruppen und Polyoxyalkylengruppen enthält.

5. Optischer Artikel nach einem der vorhergehenden Ansprüche, **dadurch gekennzeichnet, dass** die Vorläuferbeschichtung der Antibeschlagbeschichtung durch Aufbringung mindestens einer hydrophilen Verbindung A und mindestens einer hydrophoben Verbindung B gebildet wird.

6. Optischer Artikel nach Anspruch 5, **dadurch gekennzeichnet, dass** die Verbindung A ein Organosilan ist, das mindestens eine Polyoxyalkylengruppe umfasst und mindestens ein Siliciumatom aufweist, das mindestens eine hydrolysierbare Gruppe trägt.

7. Optischer Artikel nach einem der Ansprüche 5 oder 6, dass die Verbindung B ein Organosilan ist, das mindestens eine Fluorkohlenstoffgruppe umfasst und mindestens ein Siliciumatom aufweist, das mindestens eine hydrolysierbare Gruppe trägt.

8. Optischer Artikel nach einem der vorhergehenden Ansprüche, **dadurch gekennzeichnet, dass** die Vorläuferbeschichtung der Antibeschlagbeschichtung eine Oberflächenenergie aufweist, die kleiner oder gleich 25 mJ/m$^2$ ist.

9. Optischer Artikel nach einem der vorhergehenden Ansprüche, **dadurch gekennzeichnet, dass** er eine ophthalmische Linse darstellt.

10. Verfahren zur Herstellung eines optischen Artikels nach einem der vorhergehenden Ansprüche, welches umfasst:

a) Bereitstellen eines Substrats, das mindestens eine Hauptfläche aufweist,

b) Aufbringen mindestens einer hydrophilen Verbindung A und mindestens einer hydrophoben Verbindung B auf die Hauptfläche, um eine Vorläuferbeschichtung einer Antibeschlagbeschichtung zu erhalten, deren Oberfläche einen statischen Kontaktwinkel mit Wasser, der größer als 90° ist, und eine polare Komponente der Oberflächenenergie, die größer als 1,5 mJ/$m^2$ ist, aufweist,
c) Aufbringen mindestens eines Tensids auf die Oberfläche der Vorläuferbeschichtung.

**11.** Verfahren nach Anspruch 10, **dadurch gekennzeichnet, dass** die Verbindungen A und B durch Vakuumverdampfung aufgebracht werden.

**12.** Verfahren nach Anspruch 11, **dadurch gekennzeichnet, dass** die Verbindung A durch Vakuumverdampfung unter Verwendung einer auf dem Joule-Effekt beruhenden Wärmequelle aufgebracht wird, und dadurch, dass die Verbindung B durch Vakuumverdampfung unter Verwendung einer Elektronenkanone aufgebracht wird.

**13.** Verfahren nach einem der Ansprüche 10 bis 12, dass die Vorläuferbeschichtung der Antibeschlagbeschichtung durch aufeinander folgendes Aufbringen der Verbindung B und danach der Verbindung A gebildet wird

**14.** Anordnung, welche umfasst:

- einen optischen Artikel, der ein Substrat aufweist, das mit einer Vorläuferbeschichtung einer Antibeschlagbeschichtung überzogen ist, **dadurch gekennzeichnet, dass** die Oberfläche der Vorläuferbeschichtung einer Antibeschlagbeschichtung einen statischen Kontaktwinkel mit Wasser, der größer als 90° ist, und eine polare Komponente der Oberflächenenergie, die größer als 1,5 mJ/$m^2$ ist, aufweist, und
- ein Tensid, das vorzugsweise ein Hydrophil-Lipophil-Gleichgewicht (HLB) ≥ 5 aufweist.

**15.** Anordnung nach Anspruch 14, welche den optischen Artikel und ein Gewebe, das mit dem Tensid imprägniert ist, umfasst.

**16.** Anordnung nach einem der Ansprüche 14 oder 15, welche den optischen Artikel und ein trockenes Tuch, das ein Mikrofasergewebe umfasst, das mit dem Tensid imprägniert ist, umfasst.

## Claims

**1.** An optical article having a substrate coated with a precursor coating for an antifogging coating, **characterized in that** the surface of the precursor coating for an antifogging coating has a static contact angle with water of greater than 90° and a polar component of the surface energy of greater than 1.5 mJ/$m^2$, and the precursor coating for an antifogging coating is coated with a surfactant film.

**2.** The optical article as claimed in claim 1, **characterized in that** the polar component of the surface energy is greater than or equal to 1.7 mJ/$m^2$, better still greater than or equal to 2 mJ/$m^2$.

**3.** The optical article as claimed in either one of the preceding claims, **characterized in that** the precursor coating for the antifogging coating has a static contact angle with water of greater than or equal to 95°, preferably greater than or equal to 100°.

**4.** The optical article as claimed in any one of the preceding claims, **characterized in that** the precursor coating for the antifogging coating is formed from a material containing fluorocarbon groups and polyoxyalkylene groups.

**5.** The optical article as claimed in any one of the preceding claims, **characterized in that** the precursor coating for the antifogging coating is formed by depositing at least one hydrophilic compound A and at least one hydrophobic compound B.

**6.** The optical article as claimed in claim 5, **characterized in that** the compound A is an organosilane comprising at least one polyoxyalkylene group and having at least one silicon atom bearing at least one hydrolyzable group.

**7.** The optical article as claimed in either one of claims 5 and 6, **characterized in that** the compound B is an organosilane comprising at least one fluorocarbon group and having at least one silicon atom bearing at least one hydrolyzable group.

**8.** The optical article as claimed in any one of the preceding claims, **characterized in that** the precursor coating for the antifogging coating has a surface energy of less than or equal to 25 mJ/$m^2$.

**9.** The optical article as claimed in any one of the preceding claims, **characterized in that** it constitutes an ophthalmic lens.

**10.** A process for preparing an optical article as claimed in any one of the preceding claims, comprising:

a) providing a substrate having at least one main surface,
b) depositing on said main surface of the substrate at least one hydrophilic compound A and at least one hydrophobic compound B, so as to obtain a precursor coating for an antifogging coating, the surface of which has a static contact angle with water of greater than 90° and a polar component of the surface energy of greater than 1.5 mJ/$m^2$
c) depositing at least one surfactant at the surface of the precursor coating.

**11.** The process as claimed in claim 10, **characterized in that** the compounds A and B are deposited by vacuum evaporation.

**12.** The process as claimed in claim 11, **characterized in that** the compound A is deposited by vacuum evaporation using a Joule-effect heat source and **in that** the compound B is deposited by vacuum evaporation using an electron gun.

**13.** The process as claimed in any one of claims 10 to 12, **characterized in that** the precursor coating for the antifogging coating is formed by successive depositions of the compound B then of the compound A.

**14.** An assembly comprising:

- an optical article having a substrate coated with a precursor coating for an antifogging coating, **characterized in that** the surface of the precursor coating for an antifogging coating has a static contact angle with water of greater than 90° and a polar component of the surface energy of greater than 1.5 mJ/$m^2$; and
- a surfactant preferably having a hydrophilic-lipophilic balance (HLB) ≥ 5.

**15.** The assembly as claimed in claim 14, comprising said optical article and a fabric impregnated with said surfactant.

**16.** The assembly as claimed in either one of claims 14 and 15, comprising said optical article and a dry wipe comprising a microfiber fabric impregnated with said surfactant.

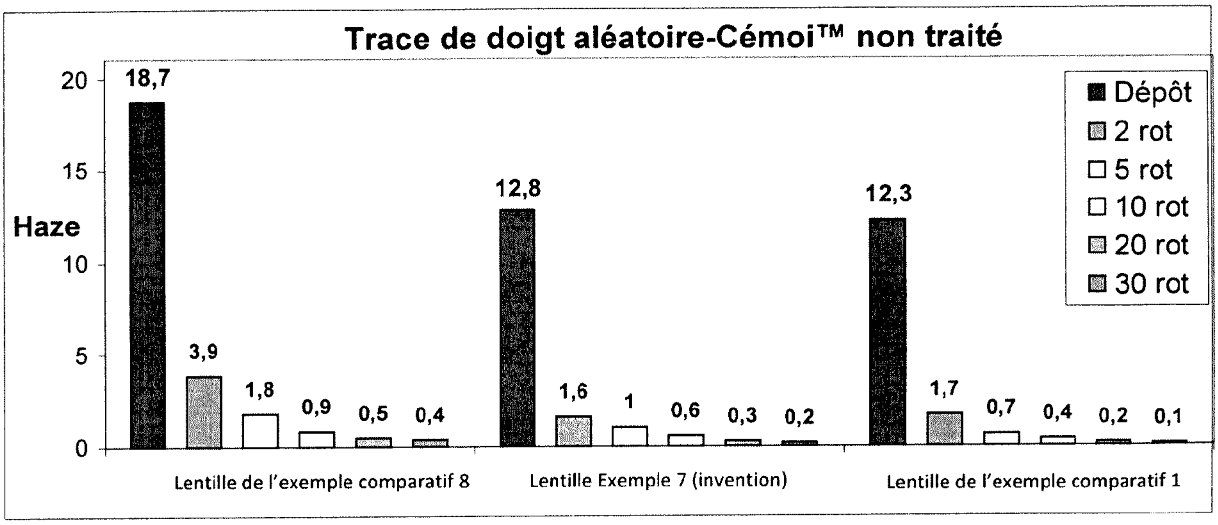


Figure 1

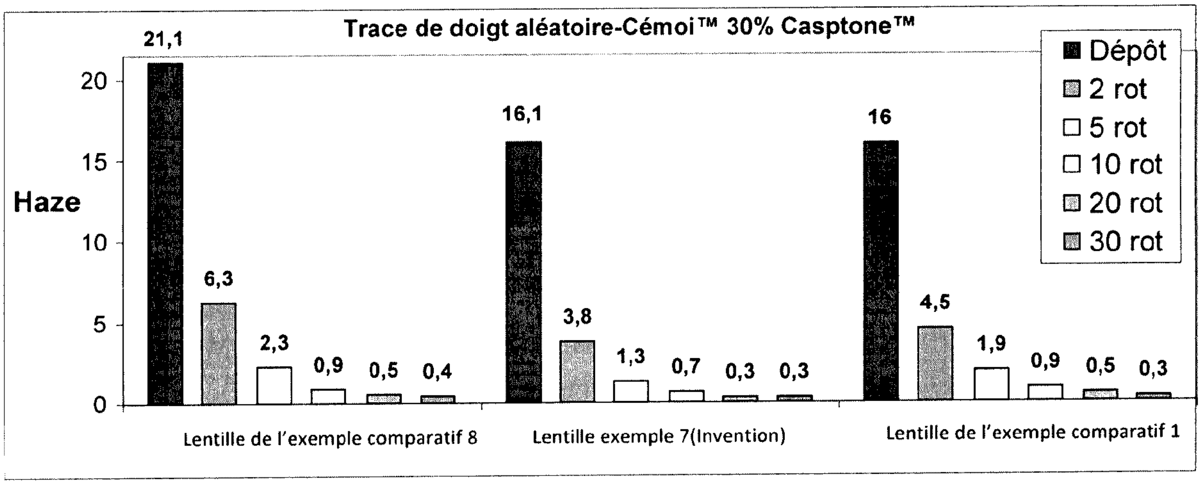


Figure 2

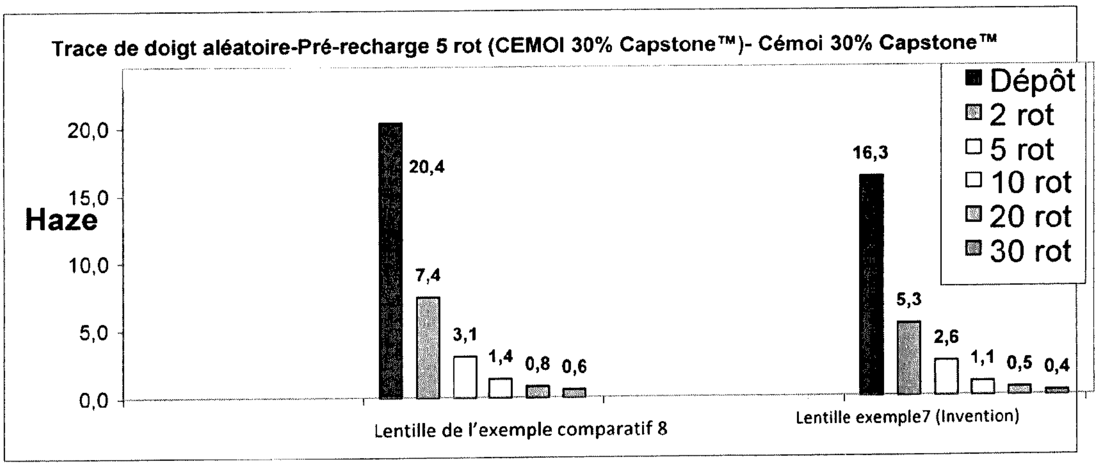


Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011080472 A
- WO 2012153072 A
- WO 2013013929 A
- JP 2005187936 B
- US 6183872 B
- JP 2004317539 A
- JP 2005281143 A
- WO 2006049020 A
- WO 2013005710 A
- WO 2010109154 A
- WO 2008053020 A
- EP 1324078 A
- FR 201350459


### Littérature non-brevet citée dans la description


- **OWENS D.K ; WENDT R.G.** Estimation of the surface force energy of polymers. *J. APPL-POLYM-SCI,* 1969, vol. 13, 1741-1747
- *CHEMICAL ABSTRACTS,* 65994-07-2
- **OWENS D. K. ; WENDT R. G.** Estimation of the surface force energy of polymers. *J. Appl. Polym. Sci.,* 1969, vol. 13, 1741-1747